# FASCICULE DE BREVET EUROPEEN

(11) **EP 1 381 464 B1**
(45) Date de publication et mention de la délivrance du brevet: **09.07.2008**
(21) Numéro de dépôt: 02730353.6
(22) Date de dépôt: 05.04.2002
(51) Int. Cl.: B01J 35/04, F01N 3/28, B01J 19/24

(54) **REACTEUR DE CATALYSE COMPRENANT UN SUPPORT DE CATALYSEUR AVEC DES RESEAUX DE CANAUX SÉCANTS**
KATALYTISCHER REAKTOR MIT EINEM KATALYSATORTRÄGER MIT KREISENDEN KANAL-NETZWERKEN
CATALYSIS REACTOR COMPRISING CATALYST SUPPORT WITH INTERSECTING CHANNEL NETWORK

(30) Priorité: 05.04.2001 FR 0104760
(43) Date de publication de la demande: 21.01.2004
(73) Titulaire: Dullien, Francis A. L., Dumbo, Ontario N0J 1G0 (CA); Institut Français du Pétrole, 92852 Rueil-Malmaison Cedex (FR)
(72) Inventeur: DULLIEN, Francis, A., L., Dumbo, Ontario N0J 1G0 (CA); DURAND, Daniel, F-92500 Rueil-Malmaison (FR); DIAB, Edmond DI, DECEASED (FR)
(74) Mandataire: Schmitt, Nicolas A.J.
(86) Numéro de dépôt international: PCT/FR2002/001191
(87) Numéro de publication internationale: WO 2002/081083

(56) Documents cités:
- EP-A- 0 315 047
- WO-A-97/27385
- DE-A- 19 835 246
- PATENT ABSTRACTS OF JAPAN vol. 1996, no. 05, 31 mai 1996 (1996-05-31) & JP 08 019742 A (BABCOCK HITACHI KK), 23 janvier 1996 (1996-01-23)

## Description

La présente invention se rapporte à un réacteur de catalyse comprenant un support de catalyseur de type monolithe avec des réseaux de canaux sécants.

Elle concerne plus particulièrement des supports mis en oeuvre dans des réactions catalytiques et assurant, par leurs caractéristiques de structures, des régimes particuliers pour l'hydrodynamique des écoulements des fluides bénéfiques à l'activité catalytique de la transformation des réactifs gazeux et/ou liquides qui les traversent.

Comme il est connu en épuration catalytique de gaz d'échappement, tels que ceux rejetés par des centrales thermiques ou des moteurs à combustion interne, notamment de véhicules automobiles, les phases catalytiques mises en oeuvre sont généralement déposées sur des supports monolithiques en matériaux céramiques ou métalliques.

Ces supports sont généralement réalisés par extrusion de céramique ou par enroulement de feuillards métalliques ondulés ou par la superposition de tôles métalliques de manière à obtenir un corps monolithique avec un seul réseau de canaux monodimensionnels et monodirectionnels.

Le fluide à traiter va ainsi parcourir les canaux présents dans ce support et les constituants de ce fluide vont réagir au contact des phases catalytiques présentes dans ces canaux.

Il a été déjà proposé, comme mieux décrit dans les demandes de brevet WO 97/27385 ou DE 198 35 246 ou EP-A-0 315 047 ou JP 08 019742, d'utiliser un support de catalyseur avec un corps monolithique comprenant un réseau initial de canaux et au moins un réseau additionnel de canaux avec une disposition selon laquelle les canaux des réseaux soient sécants entre eux.

De tels supports présentent certes de nombreux avantages mais peuvent encore être améliorés.

En effet, les performances réactionnelles, des catalyseurs préparés sur de tels supports ne sont pas toujours suffisantes car le temps de contact des réactifs avec la phase catalytique n'est pas suffisant pour obtenir, à la fin du traitement, un fluide « propre ».

La présente invention se propose de remédier aux inconvénients ci-dessus mentionnés en disposant d'un réacteur de catalyse selon la revendication 1 qui permette, de part ces effets particuliers sur l'hydrodynamique de l'écoulement du fluide, de conférer à la réaction catalytique à laquelle il participe, un surcroît d'activité pour la transformation des réactifs.

Ainsi, l'invention concerne un réacteur de catalyse comprenant un support monolithique portant au moins un catalyseur pour des réactions catalytiques fluide/fluide ledit support comprenant un corps monolithique avec un réseau initial de canaux et au moins un réseau additionnel de canaux avec une disposition selon laquelle les canaux des réseaux soient sécants entre eux, caractérisé en ce que le réseau additionnel de canaux comporte une densité de canaux moindre que celle du réseau initial, en ce que les canaux du réseau additionnel comporte une section ouverte plus grande que celle des canaux du réseau initial et en ce que le support de catalyseur est chargé dans le réacteur en respectant le sons de passage du fluide au travers du réseau initial de canaux.

Préférentiellement, les axes directionnels d'au moins deux réseaux de canaux sécants font un angle entre eux compris entre 10 et 170 degrés.

Avantageusement, le rapport entre les sections ouvertes des canaux appartenant respectivement à au moins deux réseaux sécants est compris entre 1 et 10000.

De plus, le rapport entre le nombre de canaux de faible section appartenant à un premier réseau et le nombre de canaux de section plus large appartenant à au moins un deuxième réseau sécant est compris entre 0,001 et 1000.

Conformément à une autre caractéristique, les canaux d'au moins un réseau ont une structure continue et rectiligne.

Par ailleurs, le support de catalyseur comporte une structure monolithique constituée par un matériau céramique.

En variante, ce support de catalyseur comporte une structure monolithique constituée par un matériau métallique.

Cette structure monolithique a une structure de type nid d'abeille, de mousse ou de fibres.

Dans un premier mode de réalisation, un tel réacteur est utilisé pour un catalyseur pour l'épuration de gaz d'échappement ou pour un catalyseur pour des réactions catalytiques entre deux fluides.

La présente invention sera mieux comprise à lecture de la description qui va suivre en se référant aux dessins annexés, donnés à titre d'exemple et sur lesquels :
- la figure 1 est une vue en perspective d'un support de catalyseur selon la technique antérieure;
- la figure 2 est une vue schématique en coupe partielle selon le plan AA de la figure 1 ;
- la figure 3 est une vue schématique en coupe partielle montrant un support de catalyseur selon l'invention;
- la figure 4 est une vue schématique en coupe partielle montrant une autre disposition du support de catalyseur non conforme a l'invention.

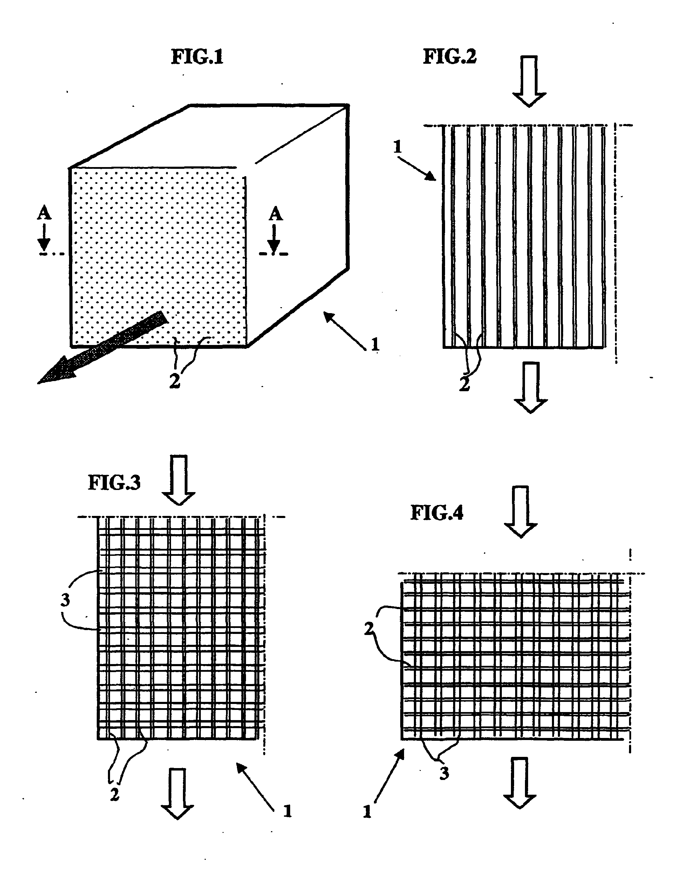

En se référant aux figures 1 et 2, le support de catalyseur de la technique antérieure comprend un corps monolithique 1, ici à titre d'exemple de forme parallélépipédique, comprenant un réseau de canaux 2 monodirectionnels et répartis de façon régulière et homogène.

Ces canaux ont la même section ouverte transversale S1 et traverse de part en part le corps monolithique 1 selon un trajet sensiblement rectiligne en étant issus d'une face du corps monolithique pour aboutir sur la face opposée de ce corps.

Ce monolithe peut être réalisé avec différents matériaux tels que matériau céramique, métallique, composite ou synthétique sous forme de structure « nid d'abeille », de mousse, de fibres tissées ou de fibres enchevêtrées (feutre).

Les, monolithes les plus usuels et certainement les moins onéreux à fabriquer sont ceux en céramique dont les composants essentiels peuvent être de l'alumine, des alumino-silicates éventuellement dopés par de la zircone (cordiérite, mullite, mullite-zircone, ...). Des matériaux, plus délicats à mettre en oeuvre et de coût plus élevé sont les carbures et nitrures de silicium.

Des monolithes en céramique peuvent avoir une structure en « nid d'abeille », c'est à dire qu'ils comportent un réseau homogène de canaux rectilignes unidirectionnels. Ces monolithes, réalisés par une technique d'extrusion, et généralement mis en oeuvre comme support de catalyseur pour la dépollution des gaz d'échappement automobiles peuvent être traversés par une dizaine à une centaine de canaux par centimètre carré (100 à 600 cpsi) de section plus ou moins large (de l'ordre de 0,5 à 1,5 mm de coté si les canaux sont de forme carrée).

Pour des applications en dépollution de rejets de centrale thermique, cette même structure de monolithe est mise en oeuvre avec des matériaux généralement différents, des sections de canaux plus larges (de l'ordre du cm²) et une densité de canaux plus restreinte.

Des mousses réalisées avec ce même type de matériau céramique, ou avec des nitrures ou des carbures de silicium peuvent également être mise en oeuvre ainsi que des mousses en matériaux synthétiques ou composites.

De même, des structures fibrillaires de ces matériaux, sous la forme de fibres enchevêtrées (type feutre) ou de fibres tissées peuvent également être choisies, pour obtenir après mise en forme des supports monolithiques.

Dans ces cas le réseau initial de canaux sera constitué par les pores de la mousse ou les cellules de la structure fibrillaire et les canaux ne seront plus unidirectionnels ni continus et leur taille sera généralement plus restreinte.

Des supports métalliques peuvent également être utilisés et des monolithes industriels disposant d'un réseau de canaux sont mis en oeuvre, en particulier pour des applications de support catalytique pour l'épuration des gaz d'échappement automobiles.

Les matériaux généralement utilisés sont des aciers spéciaux de type « Fecralloy », ou des aciers aluminiés ou aluminisés. Ces aciers renferment, soit dans leur composition soit en surface du matériau, de l'aluminium qui, après traitement spécial, révèle en surface une micro-couche d'alumine qui protège le support, dans des conditions sévères d'utilisation (température, environnement oxydant et corrosif), d'une détérioration mécanique, structurale ou physico-chimique, trop rapide.

Ces matériaux utilisés sous forme de feuillards (tôles de quelques dizaines de microns d'épaisseur) ou sous formes de fibres peuvent conduire à la réalisation de monolithes ayant, lors de leur conception, un réseau de canaux. Les feuillards préalablement ondulés peuvent être routés pour réaliser des monolithes à structure en nid d'abeille. Ces feuillards ondulés, après découpe, peuvent être également empilés pour réaliser des monolithes où les canaux d'un même réseau communiquent entre eux. Des fibres de quelques centimètres de longueur et de quelques dizaines de millimètres de largeur peuvent être également produites à partir de ces matériaux. Par compression et soudure entre elles de ces fibres, des monolithes peuvent être produits.

En général, il est souhaitable de déposer sur le support développant une très faible surface spécifique (peu différente de la surface géométrique), un enduit de grande surface spécifique (environ 50 à 200 m²/g), généralement appelé wash-coat. Ce dépôt est réalisé en une ou plusieurs étapes de telle manière que le support soit uniformément recouvert par cet enduit. Une technique consiste à immerger le support dans une suspension du produit à mettre en oeuvre, puis à éliminer par soufflage l'excèdent de matière qui bouche les canaux, et enfin à fixer cet enduit sur le matériau du support par une ou plusieurs opérations de séchage-catcination.

Les éléments actifs du catalyseur sont généralement des métaux de transitions (Cu, Co, Ni, Fe, Mo, Mn, ...) ou des métaux précieux ou nobles (Pt, Pd, Rh, Ru, Ir, Au, Ag,...). Ils sont habituellement introduits sous forme d'une solution de leurs sels solubles (nitrates, chlorures, acétates, ...). Cette opération peut se faire après l'étape d'enduction selon des techniques connues de l'homme de l'art, telles que les imprégnations à sec ou en excès, par vaporisation de solution sur et dans le monolithe enduit, soit par échange ionique. Ces éléments actifs peuvent être également déposés sur les matériaux constituant l'enduit (wash-coat) avant l'étape d'enduction.

A partir de ce support de la technique antérieure, la demanderesse a effectué une série de tests selon les étapes ci-dessous.
- On dispose d'un corps monolithique en céramique de dimension 10x10x10 cm avec un réseau de canaux 2 dont la densité est de 66 canaux par cm² (soit 400 cpsi) et la section, ouverte S1 pour chacun d'eux d'environ 1 mm²;
- Ce support est revêtu dans sa totalité, y compris dans les canaux 2, par un enduit (wash-coat) d'alumine à raison de 100g par litre de substrat ;
- II est ensuite imprégné par un catalyseur, à base de solution de sel de platine de telle manière que la teneur en platine soit de 0,5 % en poids par rapport à l'ensemble monolithe et enduit ;
- Ce support de catalyseur est chargé dans un réacteur catalytique en s'assurant de la parfaite étanchéité du système;
- La montée en température du réacteur est programmée au régulateur à raison de 5°C /min ;
- Dans le réacteur circule, selon les flèches indiquées sur les figures, un gaz avec de l'air chargé à 2 g/Nm³ de xylènes avec un débit de 20 m³/h.

Un analyseur équipé d'un détecteur à ionisation de flamme est placé en sortie de réacteur et permet de suivre en continu l'évolution de la concentration en hydrocarbure (analyse du carbone total en équivalent méthane) après réaction catalytique et de déterminer ainsi le taux de conversion des xylènes.

Les résultats de ces tests ont été les suivants :

Lors de la montée en température dans le réacteur, on constate que la température, pour laquelle 50% des xylènes sont oxydés (température de light off = TLO), est de 240°C en sortie de réacteur et que la conversion maximale des xylènes plafonne à 94% pour une température de 285°C.

On se reporte maintenant à la figure 3 qui montre un support de catalyseur selon l'invention.

Ce support comprend un corps monolithique 1 avec un réseau de canaux 2, dénommé dans la suite de la description réseau initial de canaux, qui a les mêmes caractéristiques que celles décrites en relation avec les figures 1 et 2.

Selon l'invention, le corps 1 comprend au moins un réseau additionnel de canaux 3 dont les canaux sont sécants avec les canaux du réseau initial et de manière préférentielle, sécants au moins deux à deux.

Avantageusement, les canaux 3 ont une section ouverte transversale S2 ainsi qu'une densité différente de celles des canaux du réseau initial.

Préférentiellement, le rapport entre le nombre de canaux de faible section appartenant à un réseau et le nombre de canaux de section plus large appartenant à au moins un réseau sécant est compris entre 0,001 et 1000.

Contrairement au réseau initial de canaux 2, les canaux 3 d'au moins un réseau additionnel peuvent avoir une distribution et une répartition non homogène ainsi qu'une direction non rectiligne.

Afin d'obtenir un support de catalyseur performant, le rapport des sections ouvertes des canaux de plus grande section par celles des canaux de plus petite section est compris entre 1 et 10000, de préférence entre 1 et 5000 et de manière préférée entre 1 et 1000 et le rapport entre le nombre de canaux 2 appartenant au réseau initial et le nombre de canaux 3 appartenant à un réseau additionnel, sécant avec le réseau initial, est compris entre 1 et 1000, de préférence entre 1 et 500 et de manière préférée entre 1 et 100.

Chacun des réseaux de canaux a une orientation différente dans l'espace et les axes directionnels de chacun de ces réseaux, sécants entre eux au moins deux par deux, sont orientés de telle manière que les angles définis entre chacun d'eux soient compris entre 10 et 170 degrés, de préférence entre 30 et 150 degrés et de manière préférée entre 60 et 120 degrés.

A partir des produits de la technique antérieure et mentionnés ci-dessus (supports monolithiques céramiques ou métalliques, à structure nid d'abeille, ou de mousse ou de fibres), il sera donc très facile de créer un réseau additionnel de canaux.

Ce réseau additionnel disposera d'une densité de canaux plus faible dont les sections d'ouverture seront plus larges.

De manière préférentielle, le nombre de canaux de plus petite section sera supérieur à celui des canaux de section supérieure.

De préférence, les canaux appartenant au réseau initial de canaux sécants sont répartis de façon régulière et homogène sur une face du support monolithique et ont la même section ouverte et traversent de part en part le monolithe selon un trajet de préférence rectiligne.

Par contre, pour le ou les réseaux additionnels, qui peuvent avoir été créés lors de la fabrication du support, les distributions géométriques de l'ouverture des canaux leur appartenant ainsi que l'homogénéité de leur répartition sur une section du support et leur profil rectiligne peuvent être imparfaites.

Ce réseau additionnel pourra être réalisé aisément, soit avant, soit après le dépôt de la phase catalytique, par des techniques usuelles de perçage (mécanique, électromécanique, laser), mais d'autres techniques peuvent être également mises au point pour créer lors de la mise en forme du monolithe, deux ou plusieurs réseaux de canaux répondant aux spécifications de l'invention.

Dans un autre mode d'obtention d'un support de catalyseur constitué de fibres, il peut être prévu de revêtir les fibres par la phase catalytique puis de former le corps monolithique avec ses réseaux de canaux.

A partir de ce type de nouveau support de catalyseur, la demanderesse a mené une campagne de tests comparatifs par rapport au support de la technique antérieure mentionné plus haut.

Selon un premier test comparatif, un monolithe de la technique antérieure, tel que décrit en relation avec les figures 1 et 2, est modifié par création d'un réseau additionnel de canaux 3 disposé sensiblement perpendiculairement au réseau initial de canaux 2 et composé par 85 canaux de 4 mm de diamètre avec une densité de 0,85 canaux par cm² (6 cpsi) et une section ouverte S2 d'environ 12 mm², répartis uniformément sur toute la section du monolithe.

Les quantités d'enduit (wash-coat) et de platine déposées sur ce support sont identiques à celle du précédent catalyseur.

Comme dans le test sur le support de la technique antérieure, le support de catalyseur est chargé dans le réacteur en respectant le même sens de passage des gaz au travers du monolithe, à savoir au travers du réseau initial de canaux 2. Les mêmes conditions opératoires pour la conduite de l'expérimentation sont appliquées.

Dans ces conditions, une amélioration notable de l'efficacité du catalyseur est observée avec :
- Abaissement de la température de demi-conversion:TLO=220°C au lieu de 240°C
- Conversion de 94% des xylènes à 265° au lieu de 285°
- Conversion totale des xylènes à 335°C

Il est à noter que, contrairement aux résultats du test sur le support de la technique antérieure, l'oxydation totale des xylènes a été atteinte.

Selon un autre test comparatif, le support de catalyseur ci-dessus est rechargé dans le réacteur, comme cela est montré à la figure 4, de telle manière que les gaz circulent au travers du réseau additionnel de canaux 3 qui est moins dense mais dont la section ouverte de chaque canal est environ douze fois plus grande.

Les conditions opératoires sont identiques à celles précédemment mentionnées à savoir un débit de 20 m³/h.

II a pu être constaté que l'efficacité du catalyseur se révèle encore plus importante avec :
- Une température de demi-conversion (TLO) de 210°C au lieu de 240°C
- Un taux de conversion de 94 % pour une température de 225°C au lieu de 285°C
- Une conversion totale des xylènes pour une température de 260°C

La différence d'efficacité entre le catalyseur selon la figure 2 et celui de la figure 3 peut s'expliquer par le fait que, dans le cas de la figure 3, les gaz circulent dans un réseau initial de canaux 2 de section de 1 mm² qui sont interrompus à intervalles fréquents, par des canaux 3 de section de 12 mm² dans lesquels a lieu un mélange supplémentaire des gaz avec le xylène résiduel, ce qui a pour avantage d'augmenter le taux de conversion

De même, la différence d'efficacité entre le catalyseur de la figure 2 et celui de la figure 4 peut s'analyser par la modification des écoulements hydrodynamiques entre les canaux 2 et 3. Par exemple, si la circulation des gaz est en état turbulent dans les canaux 3 de la figure 4, la circulation dans les canaux 2 du catalyseur de la figure 2 peut être en état laminaire

Dans le catalyseur de la figure 4, les canaux 3, de section ouverte de 12 mm², sont pourvus sur leur périphérie de cavités résultant du réseau initial sécant de canaux 2, ce qui entraîne une rugosité des parois des canaux 3 qui peut, dans certaines conditions, générer une circulation des gaz dans les canaux 3 en état turbulent avec un Nombre de Reynolds inférieur à 2100, compte tenu desdites conditions.

Ainsi selon le tableau récapitulatif ci-après :

| | Test 1 | Test 2 | Test 3 |
|---|---|---|---|
| **Conditions opératoires** | | Air + 2g/m³ (xylènes) | |
| | | Débit gaz : 20 m³/h - 5 °C/min | |
| **Support** | Standard avec 66 canaux/cm² de 1 mm² de section | Standard + 2ème réseau de 0,85 canaux/cm² de 12 mm² de section | Standard + 2ème réseau de 0,85 canaux/cm² de 12 mm² de section |
| **Sens passage gaz** | Réseau initial | Réseau initial | Réseau additionnel |
| **Résultats : températures pour atteindre 50, 94 et 100% de conversion** | | | |
| **Conversion 50%** | 240° | 220° | 210° |
| **Conversion 94 %** | 285° | 265° | 225° |
| **Conversion 100%** | - | 335° | 260° |

il a pu être mis en valeur que la création d'un réseau additionnel de canaux sur le support de catalyseur a un effet bénéfique triple :
- abaissement notable de la température d'amorçage de la réaction d'oxydation,
- abaissement de la température de conversion maximale du produit et
- augmentation du taux de conversion.

Une autre étude comparative a été effectuée par la demanderesse sur la base de catalyseurs de gaz d'échappement pour moteur Diesel.

Pour cela, la demanderesse a utilisé deux catalyseurs d'oxydation Diesel du commerce, préparés sur des supports céramique à structure nid d'abeille imprégnés de catalyseurs avec d'une densité de 48 canaux par cm² (300 cpsi) et de section ouverte d'environ 1 mm², découpés sous la forme de support cubique de 10x10x10 cm (volume total de 21).

Ces deux cubes sont montés bout à bout dans une ligne d'échappement d'un moteur Diesel de 1900 cm³ de cylindrée, installé sur un banc moteur avec une disposition des réseaux de canaux de chaque cube dans le prolongement les uns des autres.

En sortie de catalyseur sont installés des analyseurs CO (par IR) et HC (par FID) pour mesurer en continu les évolutions des teneurs en polluants gazeux.

Ces deux catalyseurs sont testés dans des conditions stabilisées du moteur, à savoir un régime moteur de 1750 t/min, une charge au frein hydraulique correspondant à 30% de la puissance maximale, ce qui conduit à une température des gaz en entrée de catalyseur de 240 °C.

Par comparaison à des mesures réalisées sans système catalytique, les taux de conversion des principaux polluants s'établissent pour ces conditions opératoires à :
- CO = 91 %
- HC = 82 %

Selon un premier essai comparatif, il a été utilisé deux catalyseurs découpés selon la procédure ci-dessus, mais qui sont en plus percés sensiblement perpendiculairement au réseau initial de canaux par un réseau additionnel de canaux avec une section ouverte de 7 mm² et avec une densité d'environ 1,4 canaux par cm² (10 cpsi). Ils sont ensuite montés en série dans la ligne d'échappement en conservant le passage des gaz au travers des canaux du réseau initial.

Dans ces conditions les performances sont les suivantes :
- CO = 93%
- HC = 85%

Dans un autre essai non conforme à l'invention, les conditions et configurations de l'essai ci-dessus sont répétées mais en modifiant le chargement du catalyseur, à savoir que le gaz passe dans les canaux du réseau additionnel qui, dans le cas considéré, sont de plus grande section et non plus dans le réseau initial du support industriel.

La conservation d'un même régime moteur de 1750 t/min et un couple de 60 Nm avec une perte de charge supérieure sur la ligne d'échappement induite par la diminution de la porosité ouverte du réseau additionnel de canaux au travers duquel circulent les gaz, a conduit à une température de sortie des gaz d'échappement sensiblement supérieure à celle de l'essai précèdent, soit 250 °C.

Dans ces conditions les taux de conversion se sont établis comme suit :
- CO = 98%
- HC = 90%

L'essai précédent a été répété mais en ajustant la charge moteur de telle manière que la température se stabilise à 240°C et les taux de conversions sont :
- CO = 97 %
- HC = 88 %

Dans ces essais, les performances catalytiques en oxydation des polluants gazeux (CO et HC) sont également améliorées par la création d'un réseau additionnel de canaux.

Une autre série d'essais a été réalisée avec un type particulier de catalyseur de dépollution de gaz d'échappement de moteur Diesel, plus communément appelé DeNOx.

Ce catalyseur présente la particularité de piéger les oxydes d'azote (NOx) lorsque le moteur fonctionne en mélange pauvre et les oxydes d'azotes ainsi adsorbés sont ensuite réduits en azote moléculaire lors des injections intermittentes do carburant.

De manière préférentielle, la phase catalytique mise en oeuvre est composé de métaux précieux et est déposée sur une alumine dopée au baryum (environ 15 % en poids) qui sert à la fois de support aux métaux précieux et de masse adsorbante pour les oxydes d'azote.

Le premier essai est conduit en utilisant deux monolithes en céramique avec une structure en nid d'abeille ayant les dimensions de ceux décrits ci-dessus en relation avec les catalyseurs d'oxydation Diesel du commerce et sur lesquels est déposée la phase catalytique adsorbante à raison de 150 g d'enduit (wash-coat) par litre de support en céramique.

L'ensemble des deux monolithes disposés en série est installé sur une ligne d'échappement d'un moteur Diesel pour lequel on règle les conditions de fonctionnement de telle manière que la température des gaz d'échappement qui passe dans le catalyseur soit de 300 °C et leur vitesse spatiale (VVH) soit de 50000h⁻¹.

Dans ces conditions d'essais, il a pu être constaté que la quantité d'oxydes d'azote piégée sur la masse adsorbante correspond à 9 % de la masse théoriquement adsorbable sur le support avant que n'apparaissent des émissions d'oxydes d'azote en sortie de la masse catalytique adsorbante.

Le même essai est répété mais en utilisant des corps monolithiques selon l'invention c'est à dire avec un réseau additionnel de canaux.

Ce réseau additionnel de canaux est sensiblement perpendiculaire au réseau initial et comporte environ 1,5 canaux par cm² avec une section ouverte de 7 mm².

On a pu obtenir comme résultat que la quantité d'oxydes d'azote piégée sur la masse adsorbante correspond à 15 % de la masse théoriquement adsorbable sur le support avant que n'apparaissent des émissions d'oxydes d'azote en sortie de la masse catalytique.

Ainsi, grâce à l'invention, la quantité d'oxydes d'azote piégée est augmentée de plus de 60%.

Une ultime série de tests est conduite avec un catalyseur de type 3 voies monté sur la ligne d'échappement d'un véhicule équipé d'un moteur à essence dont la richesse est régulée à la valeur stoechiométrique (richesse 1).
Ce véhicule est monté sur un banc à rouleau et le test normalisé européen de pollution (dénommé NMVEG) lui est appliqué, ce test correspondant à un fonctionnement en zone urbaine.
Durant ce test, le paramètre suivi a été le temps nécessaire à l'allumage du catalyseur, c'est à dire le temps qui s'écoule entre la mise en route du moteur (avec une température du catalyseur pour laquelle le taux de conversion des polluants est nul) et le démarrage de l'activité catalytique (avec une température dite TLO « Température de Light Off» pour laquelle plus de 50 % des polluants sont convertis).

Comme dans les exemples précédents, la même quantité de phase catalytique a été déposée soit sur des supports en céramique de la technique antérieure avec un réseau initial de canaux de 66 canaux par cm², soit sur des supports selon l'invention qui comporte, en plus, un réseau additionnel de canaux disposés sensiblement perpendiculairement au réseau initial et qui comprend environ 1, 4 canaux par cm² avec une section ouverte de 7 mm².

Les deux supports ont été testés dans les mêmes conditions et il a pu être constaté que le temps pour atteindre la température dite TLO était de 165 secondes pour le support de la technique antérieure et de 115 secondes pour le support selon l'invention.

Ainsi, la présence sur un support de type monolithe d'au moins deux réseaux de canaux qui présentent les caractéristiques suivantes :
- tailles des canaux différentes dans chaque réseau,
- réseaux de canaux sécants
conduit à améliorer les performances réactionnelles d'un système (performances catalytiques dans les exemples ci-dessus), en modifiant l'hydrodynamique des écoulements des fluides au travers du support de l'invention.

La présente invention n'est pas limitée aux exemples décrits en relation avec des réactions catalytiques pour un fluide résultant de la combustion dans un moteur à combustion interne, tel que les gaz d'échappement mais englobe toutes variantes.

Elle peut notamment s'appliquer à des catalyseurs pour des réactions catalytiques permettant la catalyse d'un fluide sous une phase gazeuse ou liquide comme généralement utilisé dans le domaine du traitement du pétrole.

## Revendications

1. Réacteur de catalyse comprenant un support monolithique portant au moins un catalyseur pour des réactions catalytiques fluide/fluid ledit support comprenant un corps monolithique (1) avec un réseau initial de canaux (2) et au moins un réseau additionnel de canaux (3) avec une disposition selon laquelle les canaux (2, 3) des réseaux salent sécants entre eux, **caractérisé en ce que** le réseau additionnel de canaux (3) comporte une densité de canaux moindre que celle du réseau initial, **en ce que** les canaux (3) du réseau additionnel comporte une section ouverte plus grande que celle des canaux du réseau initial et **en ce que** le support de catalyseur est chargé dans le réacteur en respectant le sens de passage du fluide au travers du réseau initial de canaux (2).

2. Réacteur selon la revendication 1, **caractérisé en ce que** les axes directionnels d'au moins deux réseaux de canaux sécants font un angle entre eux compris entre 10 et 170 degrés.

3. Réacteur selon l'une des revendications précédentes, **caractérisé, en ce que** le rapport entre les sections ouvertes des canaux appartenant respectivement à au moins deux réseaux sécants est compris entre 1 et 10000.

4. Réacteur selon l'une des revendications précédentes, **caractérisé en ce que** le rapport entre le nombre de canaux de faible section appartenant à un premier réseau et le nombre de canaux de section plus grande appartenant à au moins un deuxième réseau sécant est compris entre 0,001 et 1000.

5. Réacteur selon l'une des revendications précédentes, **caractérisé en ce que** les canaux (2, 3) d'au moins un réseau ont une structure continue et rectiligne.

6. Réacteur selon l'une des revendications précédentes, **caractérisé en ce qu'**il comporte une structure monolithique constituée par un matériau céramique.

7. Réacteur selon l'une des revendications 1 à 5, **caractérisé en ce qu'**il comporte une structure monolithique constituée par un matériau métallique.

8. Réacteur selon l'une des revendications 6 à 7, **caractérisé en ce qu'**il comporte une structure monolithique ayant des structures de type nid d'abeille.

9. Réacteur selon l'une des revendications 6 à 7, **caractérisé en ce qu'**il comporte une structure monolithique se présentant sous forme de mousse.

10. Réacteur l'une des revendications 6 à 7, **caractérisé en ce qu'**il comporte une structure monolithique se présentant sous forme de fibres.

11. Réacteur selon la revendication 1, **caractérisé en ce qu'**il s'applique à des réactions catalytiques pour un fluide résultant de la combustion dans un moteur à combustion interne.

## Claims

1. A catalysis reactor including a monolithic support bearing at least one catalyst for fluid/fluid catalytic reactions, said support including a monolithic body (1) with an initial network of channels (2) and at least one additional network of channels (3) with an arrangement according to which the channels (2, 3) of the networks are secant in relation to each other, **characterised in that** the additional network of channels (3) comprises a channel density which is less than that of the initial network, **in that** the channels (3) of the additional network comprise an open section which is larger than that of the channels of the initial network and **in that** the catalyst support is loaded into the reactor adhering to the passage direction of the fluid through the initial network of channels (2).

2. The reactor according to Claim 1, **characterised in that** the directional axes of at least two networks of secant channels form an angle between them of between 10 and 170 degrees.

3. The reactor according to one of the preceding claims, **characterised in that** the ratio of the open sections of the channels to each other, which belong respectively to at least two secant networks, is between 1 and 10000.

4. The reactor according to one of the preceding claims, **characterised in that** the ratio of the number of small-section channels, which belong to a first network, to the number of larger-section channels, which belong to at least one second secant network, is between 0.001 and 1000.

5. The reactor according to one of the preceding claims, **characterised in that** the channels (2, 3) of at least one network have a continuous and rectilinear structure.

6. The reactor according to one of the preceding claims, **characterised in that** it comprises a monolithic structure made up of a ceramic material.

7. The reactor according to one of Claims 1 to 5, **characterised in that** if comprises a monolithic structure made up of a metal material.

8. The reactor according to one of Claims 6 to 7, **characterised in that** it comprises a monolithic structure having honeycomb-type structures.

9. The reactor according to one of Claims 6 to 7, **characterised in that** it comprises a monolithic structure which is in the form of a foam.

10. The reactor according to one of Claims 6 to 7, **characterised in that** it comprises a monolithic structure which is in the form of fibres.

11. The reactor according to Claim 1, **characterised in that** it is applicable to catalytic reactions for a fluid resulting from combustion in an internal combustion engine.

## Patentansprüche

1. Katalysereaktor, der einen monolithischen Träger umfasst, der mindestens einen Katalysator für katalytische Fluid/Fluid Reaktionen trägt, wobei der genannte Träger einen monolithischen Körper (1) mit einem ursprünglichen Kanalnetz (2) und mindestens einem zusätzlichen Kanalnetz (3) in einer Anordnung umfasst, in welcher die Netzkanäle (2,3) sich schneiden,
**dadurch gekennzeichnet, dass** das zusätzliche Kanalnetz (3) eine geringere Kanaldichte aufweist als das ursprüngliche Netz, dass die Kanäle (3) des zusätzlichen Netzes einen größeren lichten Querschnitt als die Kanäle des ursprünglichen Netzes aufweisen, und dass der Katalysatorträger unter Berücksichtigung der Durchflussrichtung des Fluids durch das ursprüngliche Kanalnetz (2) in den Reaktor geladen wird.

2. Reaktor nach Anspruch 1, **dadurch gekennzeichnet, dass** die Richtungsachsen von mindestens zwei sich schneidenden Kanalnetzen miteinander einen Winkel zwischen 10 und 170 Grad umschließen.

3. Reaktor nach einem der vorangehenden Ansprüche, **dadurch gekennzeichnet, dass** das Verhältnis zwischen den lichten Kanalquerschnitten, von Kanälen die jeweils zu mindestens zwei sich schneidenden Netzen gehören zwischen 1 und 10000 liegt.

4. Reaktor nach einem der vorangehenden Ansprüche, **dadurch gekennzeichnet, dass** das Verhältnis zwischen der Anzahl von Kanälen mit geringem Querschnitt, die zu einem ersten Netz gehören und der Anzahl von Kanälen mit größerem Querschnitt, die zu mindestens einem zweiten schneidenden Netz gehören zwischen 0,001 und 1000 liegt.

5. Reaktor nach einem der vorangehenden Ansprüche, **dadurch gekennzeichnet, dass** die Kanäle (2, 3) mindestens eines Netzes eine durchgehende und geradlinige Gestalt haben.

6. Reaktor nach einem der vorangehenden Ansprüche, **dadurch gekennzeichnet, dass** er eine monolithische Struktur, die aus einem Keramikwerkstoff besteht aufweist.

7. Reaktor nach einem der Ansprüche 1 bis 5, **dadurch gekennzeichnet, dass** er eine monolithische Struktur, die aus einem Metallwerkstoff besteht aufweist.

8. Reaktor nach einem der Ansprüche 6 bis 7, **dadurch gekennzeichnet, dass** er eine monolithische Struktur mit honigwabenartigen Strukturen umfasst.

9. Reaktor nach einem der Ansprüche 6 bis 7, **dadurch gekennzeichnet, dass** er eine monolithische schaumartige Struktur aufweist.

10. Reaktor nach einem der Ansprüche 6 bis 7, **dadurch gekennzeichnet, dass** er eine monolithische faserartige Struktur aufweist.

11. Reaktor nach Anspruch 1, **dadurch gekennzeichnet, dass** er für katalytische Reaktionen für ein Fluid, dass sich aus der Verbrennung in einer Brennkraftmaschine ergibt verwendet wird.
